# EUROPEAN PATENT SPECIFICATION

(11) **EP 4 265 708 B1**
(45) Date of publication and mention of the grant of the patent: **21.10.2026**
(21) Application number: 23166661.1
(22) Date of filing: 05.04.2023
(51) Int. Cl.: C11B 1/10, B01D 11/00, B01D 53/14, B01D 11/02, C11D 1/10

(54) **PROCESS FOR SOLVENT RECOVERY IN VEGETABLE OIL EXTRACTION**
VERFAHREN ZUR LÖSUNGSMITTELRÜCKGEWINNUNG BEI DER PFLANZENÖLEXTRAKTION
PROCÉDÉ DE RÉCUPÉRATION DE SOLVANT DANS L'EXTRACTION D'HUILE VÉGÉTALE

(30) Priority: 19.04.2022 EP 22168809; 30.06.2022 EP 22182125
(43) Date of publication of application: 25.10.2023
(60) Divisional application: 26204183.3
(73) Proprietor: Cargill, Incorporated, Wayzata, Minnesota 55391 (US)
(72) Inventor: Steverink-de Zoete, Marian Christina, 2492 MH s Gravenhage (NL); Marazzato, Michele, 3071 XP Rotterdam (NL); Beukers, Hendrik Jan, 3828 BB Hoogland (NL)
(74) Representative: Cargill IP Department

(56) References cited:
- WO-A1-2019/113289
- US-A1- 2019 000 980
- US-A1- 2019 256 795
- US-B1- 10 155 176

## Description

### FIELD OF THE INVENTION

The present invention relates to a process for recovering solvent from solvent-containing effluent gasses, preferably generated in solvent extraction systems used to extract oil from oil-containing organic material. The invention further relates to a process for solvent extraction of oil-containing organic material and the use of MCT oil as absorbent oil in solvent recovery systems.

### BACKGROUND OF THE INVENTION

Mineral Oil Hydrocarbons (MOH) may be present as contaminants in oils and fats as well as in foods prepared thereof. MOH are a complex mixture of molecules that are usually categorized into two main groups: Mineral Oil Saturated Hydrocarbons (MOSH) and Mineral Oil Aromatic Hydrocarbons (MOAH). MOSH are linear and branched (cyclo)alkanes. MOAH consists of highly alkylated mono/polycyclic aromatic hydrocarbons.

Contamination of food and feed products with MOH may occur through migration from materials in contact with food such as plastic materials, like polypropylene or polyethylene, recycled cardboard and jute bags. Contamination also occurs from the use of mineral oil-based food additives or processing aids and from unintentional contamination like for example from lubricants or exhaust gases from combustion engines.

From a health perspective, it is desirable to reduce contamination of vegetable oils with MOH during their processing.

A potential source of MOH contamination of organic material is occurring during solvent extraction of the oil from the organic material. Solvent extraction technology nowadays recovers almost all the solvent used in the extraction process and recirculate this solvent into the process. Mineral oil is commonly used in this solvent recovery step for recovering solvent from the effluent gasses from the extraction process. As a result, this process step is a potential source of contamination of the organic material or more specifically the oil extracted from it with MOH.

There is thus a need in the industry for an improved method for solvent recovery without using a potential source for MOH contamination in organic material and more specifically the oil extracted from it. The present invention provides such a process.

### SUMMARY OF THE INVENTION

The present invention relates to a method for recovering solvent from an effluent gas, and the method is comprising the steps of:
a) providing an effluent gas from a solvent extraction system wherein oil is extracted from oil-containing organic material;
b) absorbing solvent from the effluent gas using a medium-chain triglyceride (MCT) oil to absorb the solvent;
c) stripping solvent from the MCT oil from step b); and
d) reuse of the recovered MCT oil from step c) for absorbing solvent.

The present invention also relates to a process for extracting oil from oil-containing organic material by means of solvent, and the process is comprising the steps of:
i) Extracting oil-containing organic material with solvent and obtaining a miscella stream, a stream of solvent-wet residual solids, and a first effluent gas stream;
ii) Recovering solvent from the solvent-wet residual solids stream from step i) and obtaining a second recovered solvent stream, a desolventized residual solids stream and a second effluent gas stream;
iii) Separating the miscella stream from step i) into a first recovered solvent stream, extracted oil and a third effluent gas stream;
iv) Recovering solvent from an effluent gas stream comprising the first effluent gas stream from step i), the second effluent gas stream from step ii), the third effluent gas stream from step iii), or a combination of two or more thereof, wherein the solvent recovering step is comprising the method for recovering solvent from an effluent gas according to the present invention, and obtaining a third recovered solvent steam and an exit gas; and
v) Reuse of a recovered solvent stream comprising the first recovered solvent stream from step i), the second recovered solvent stream from step ii) and/or the third recovered solvent stream from step iv) for extraction of oil from oil-containing organic material.

The present invention further relates to the use of MCT oil as absorber oil for recovering solvent from an effluent gas.

### BRIEF DESCRIPTION OF THE DRAWINGS

Figure 1: is one example of the method for recovering solvent from an effluent gas of a solvent extraction system for vegetable oil extraction in accordance with the teachings of the present invention:
   (10) = Solvent absorption system;
   (11) = Absorption column;
   (12) = Effluent gas;
   (13) = Exit gas;
   (14) = solvent-lean MCT oil
   (15) = Solvent-rich MCT oil;
   (16) = Stripping column;
   (17) = Recovered solvent stream;
   (18) = Stripping agent
Figure 2: is an example of the process for extracting oil from oil-containing organic material by means of solvent in accordance with the teachings of the present invention:
   (10) = solvent absorption system;
   (12) = effluent gas comprising the first effluent gas stream (29) and/or the second effluent gas stream (33);
   (13) = exit gas;
   (17) = third recovered solvent stream;
   (20) = solvent extraction system;
   (21) = Extractor unit;
   (22) = oil-containing organic material;
   (23) = solvent comprising the first recovered solvent stream (28), the second recovered solvent stream (32) and/or the third recovered solvent stream (17);
   (24) = miscella stream
   (25) = solvent-wet residual solids
   (26) = solvent recovery unit;
   (27) = extracted oil stream;
   (28) = first recovered solvent stream;
   (29) = first effluent gas stream;
   (30) = desolventizing unit;
   (31) = desolventized residual solids;
   (32) = second recovered solvent stream;
   (33) = second effluent gas stream
   (34) = third effluent gas stream.

### DETAILED DESCRIPTION

### Method for solvent recovery from the effluent gasses

The present invention relates a method for recovering solvent from an effluent gas, and the method is comprising the steps of:
a) providing an effluent gas from a solvent extraction system wherein oil is extracted from oil-containing organic material;
b) absorbing solvent from the effluent gas using a medium-chain triglyceride (MCT) oil to absorb the solvent;
c) stripping solvent from the MCT oil from step b); and
d) reuse of the recovered MCT oil from step c) for absorbing solvent.

### Step a) - providing effluent gas from a solvent extraction system

The method according to the present invention for recovering solvent from an effluent gas, may be part of a solvent extraction system wherein oil is extracted from oil-containing organic material. "Organic material" refers to any carbon-based compounds, derived from living organisms as well as their lab-synthesized versions. Oil-containing organic material can be originating from plants, animals and micro-organisms, preferably plant material.

During the solvent extraction process, effluent gasses are generated that contain a residual amount of solvent. An effluent gas may for example originate from steam that is used in the solvent extraction system to vaporize solvent in a distillation column and that is subsequently passed through a condenser to recover condensable liquids and a non-condensable effluent gas. This residual solvent is recovered from the effluent gasses in a solvent absorption system (10) by the method according to the present invention.

The effluent gas (12) that is provided in step a) of the method of the present invention, is typically an effluent gas that has already passed through a condenser unit to remove condensable gasses and/or liquids from the gas stream. The effluent gas (12) that is provided in step a), is a non-condensable effluent gas containing residual solvent. The effluent gas (12) that is provided in step a) may comprise air mixed with residual solvent. The effluent gas (12) may contain solvent in an amount of from 50 to 70 wt.%, from 52 to 68 wt.%, or from 55 to 65 wt.% on total weight of the effluent gas. The solvent present in the effluent gas (12) may be any type of organic solvent such as, but not limited to hexane, acetone, toluene, petroleum ether, diethyl ether, ethanol, n-heptane, isopropanol, acetone, chloroform, methanol, and 1-butanol, terpenes, or any combination of two or more thereof. Typically, the solvent present in the effluent gas may be a commercial grade solvent. Preferably, the solvent present in the effluent gas (12) is comprising hexane. The term "hexane" is encompassing commercial hexane having boiling point in the temperature range of 65-69°C. Most commercial hexane available contains approximately 65% of n-hexane, with the remaining 35% of the composition being cyclopentane and hexane isomers.

The method for recovering solvent from effluent gasses of a solvent extraction system (20) may be applied in combination with any type of solvent extraction system for extracting oil from organic material. The effluent gas (12) that is provided in step a) of the method of the present invention may be effluent gas from one or more solvent extraction systems. The effluent gas (12) may originate from any processing unit of a solvent extraction system (20), such as but not limited to an extractor unit (21), a solvent recovery unit (26) or a desolventizing unit (30) and/or from any leak of air through joints or flanges. In one aspect of the invention, the effluent gas in step a) is provided from the extractor unit (21), from the solvent recovery unit (26) and/or from the de-solventizing unit (30).

### Step b) - absorbing solvent from the effluent gas using a MCT oil

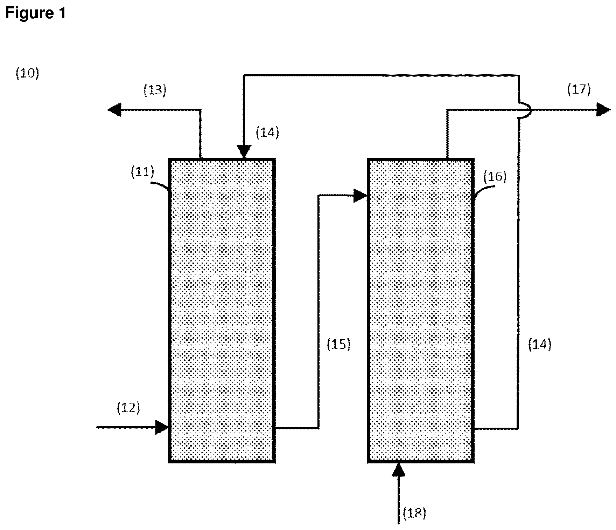

The method for recovering solvent from effluent gasses of a solvent extraction system (20) is performed in a solvent absorption system (10) (see figure 1) comprising an absorption column (11) and a stripping column (16).

In step b) of the process according to the present invention, the residual solvent that is present in the effluent gas (12) is absorbed by an MCT oil (14) by contacting the effluent gas (12) with the MCT oil (14) in the absorption column (11). The MCT oil that enters the absorption column (11) is solvent-lean MCT oil (14), containing solvent in an amount of from 0.1 to 0.6 wt.%, 0.2 to 0.5 wt.%, or from 0.3 to 0.4 wt.% on total weight of the solvent-lean MCT oil.

A "medium-chain triglyceride (MCT) oil" in the present invention is emeempessm_{f} a composition comprising triglycerides, diglycerides, monoglycerides and/or free fatty acid having a carbon chain length in a range of C6 to C12 and the fatty acid moiety from C6 to C12 of the MCT oil has a combined content in an amount of more than 70% on total weight of the fatty acid moiety. In other words, the MCT oil is a composition comprising triglycerides, diglycerides, monoglycerides and/or free fatty acid, said triglycerides, diglycerides, monoglycerides and/or free fatty acid having a combined content of a fatty acid moiety with a carbon chain length in a range of C6 to C12 in an amount of more than 70% on total weight of the fatty acid moiety. It is clear that the fatty acid moiety is referring to the carbon chain length of the fatty acid, being free or bound, preferably bound.

The fatty acid moiety of the MCT oil in step b) of the method according to the present invention may have a combined content of a fatty acid moiety with a carbon chain length in a range of C6 to C12 of more than 75%, or more than 80 wt.% on total weight of the fatty acid moiety. Preferably, the combined content of fatty acid moiety of C8 and C10 of the MCT oil in step b) of the method according to the present invention is present in an amount of more than 92 wt%, more than 94 wt%, more than 96 wt % on total weight of the fatty acid moiety. More preferably, the content of fatty acid moiety of C8 of the MCT oil in step b) isin a range of from 45 to 70 wt%, from 48 to 67 wt%, or from 50 to 65 wt%; and a content of C10 fatty acid moiety is from 30 to 50 wt%, from 32 to 47 wt%, or from 34 to 45 wt% on total weight of the fatty acid moiety. Preferably the MCT oil has a combined content of fatty acid moiety having a C8 and C10 chain length, in a range of more than 92 wt%.

The MCT oil may have a free fatty acid content of less than 50 wt.%, less than 40 wt.% or less than 30 wt.% on total weight of the MCT oil. In a preferred aspect of the invention, the MCT oil has a content of free fatty acids of less than 1%, less than 0.7 wt.% or even less than 0.5 wt.% on total weight of the MCT oil.

The MCT oil is a commercially available oil or may be obtained via any process available. Typically, the MCT oil is obtained by randomly interesterifying glycerine and medium-chain fatty acids (MCFA). These medium chain fatty acids are typically sourced from vegetable lauric oils. The term "vegetable lauric oil" is encompassing vegetable oils having a content of C6 to C12 fatty acids of more than 50%. Examples of such a vegetable lauric oil include coconut oil, palm kernel oil, babassu oil, cohune oil, tacum oil and cuphea oil or any mixture of two or more thereof. For the purposes of the present invention, the MCT source will preferably be sourced from coconut oil, palm kernel oil, or mixtures thereof. The medium chain fatty acids may for example be obtained by hydrolysis (splitting) of the lauric vegetable oil followed by a further purification of the medium chain fatty acids, e.g. by distillation.

The effluent gas (12) is contacted with the MCT oil (14) in step b) in an absorption column (11) and the solvent contained in the effluent gas (12) is transferred from the gas phase to the liquid phase of the MCT oil. Absorption columns of any suitable configuration may be used. The MCT oil (14) and the effluent gas (12) may be flowing is co-current, cross-current or counter-current direction through the absorption column (11). Preferably, the MCT oil and the effluent gases are flowing in a counter-current direction through the absorption column (11). The MCT oil (14) is following in a top-to-bottom direction and the effluent gas (12) is flowing in a bottom-to-top direction.

The absorption column (11) may include packing material such as, but not limited to, rachid rings or ceramic sadles, for increasing the intermixing of the MCT oil (14) and the effluent gas (12) and facilitating the transfer of solvent.

Preferably the MCT oil (14) is provided to step b) in the absorption column (11) at a temperature in a range of from 15 to 35°C, from 18 to 32°C, or from 22 to 30°C.

Preferably the effluent gas (12) is provided to step b) in the absorption column (11) at a temperature in a range of from 15 to 35°C, from 18 to 32°C, or from 22 to 30°C.

An exit gas (13) and a solvent-rich MCT oil (15) are obtained from step b) of the method according to the invention. The content of solvent in the exit gas is reduced such that the exit gas (13) may be discharged into the atmosphere. In a preferred aspect of the invention, the solvent content in the exit gas is less than 0.8 wt%, less than 0.5 wt%, or even less than 0.2 wt% on total weight of the exit gas. The solvent-rich MCT oil (15) has a content of solvent in a range of from 1.5 to 3.0 wt.%, from 1.8 to 2.8 wt.%, or from 2.0 to 2.5 wt% on total weight of the solvent-rich MCT oil. The solvent-rich MCT oil (15) is further treated in step c) of the method.

### Step c) - stripping solvent from the MCT oil from step c)

In step c) of the method according to the present invention, the solvent is removed from the solvent-rich MCT oil (15) that is obtained from step b). Removal of the solvent from the solvent-rich MCT oil (15) may occur in a stripping column or stripping vessel (16) wherein a stripping agent (18), such as steam or nitrogen, will strip the solvent from the MCT oil. As a result of step c) a solvent-lean MCT oil (14) and a recovered solvent stream (17) is obtained. The solvent-lean MCT oil (14) is having a solvent content in a range of from 0.1 to 0.6 wt.%, 0.2 to 0.5 wt.%, or from 0.3 to 0.4 wt.% of solvent on total weight of the recovered MCT oil. The recovered solvent stream (17) may be further sent to a condenser for condensing and further reuse of the recovered solvent in the extraction process.

Removal of the solvent from the solvent-rich MCT oil (15) in step c) may occur at a temperature in a range of from 90 to 130°C, from 100 to 125°C, or from 110 to 120°C. The stripping column or stripping vessel (16) may typically be maintained under 150 to 300mm Hg absolute pressure.

### Step d) - reuse of the recovered MCT oil from step c)

In step d) of the method according to the present invention the solvent-lean MCT oil (14) that is obtained from step c) is reused as absorbing solvent. The solvent-lean MCT oil (14) that is obtained from step c) may be recycled within any the absorption system. Preferably the solvent-lean MCT oil (14) that is obtained from step c) is recycled and provided again as the MCT oil in step b) of the method of the present invention.

The MCT oil may be used multiple times in steps b) to d) of the method according to the invention. In one aspect of the invention, the MCT oil may be used more than 5000 times, more than 8000 time, or even more than 10000 times in step b) to d). In principle the MCT oil may be re-circulated in steps b) to d) 5 to 50 times per day, during more than 90 consecutive days, more than 180 days, more than 360 days. In fact, an unending reuse can be foreseen.

The method for solvent recovery from effluent gasses according to the present invention does not make use of mineral oil as absorption oil, which is the case in existing solvent recovery systems. In such existing solvent recovery systems, the mineral oil that is used as absorption oil may cause, indirectly through the recovered solvent, a contamination of the extracted oil with MOH. Instead, the method of the present invention uses MCT oil as absorption oil and thus does not cause any contamination of the extracted oil with MOH.

Alternative, existing processes for solvent recovery from effluent gasses exist that are making use of the vegetable liquid oil from the extraction process as absorption oil. However, such vegetable liquid oils are highly unsaturated and therefore prone to oxidation and polymerization. As a consequence, they are not efficient absorption oils. They can only be recycled as absorber oil for a limited number of cycles. Alternatively, they are not recycled at all, which leads to a reduced capacity and flexibility of the oil extraction process.

The method for recovering solvent from an effluent gas according to the present invention, making use of MCT oil as absorption oil, allows to make use of the same equipment as traditional solvent recovery systems based on mineral oil. There are no adaptations needed to the equipment and the equipment can run with the same efficiency and performance. Moreover a non-ending reuse can be foreseen and the extracted oil is not contaminated with MOH.

In comparison to traditional solvent recovery systems based on mineral oil, the method for recovering solvent from an effluent gas according to the present invention, making use of MCT oil as absorption oil, results in a similar efficiency of hexane recovery, no indication of fouling of absorption column (step b)) or stripping column (step c)), no indication of polymerization, similar consumption of absorption oil over time, similar consumption of hexane over time and similar discoloration of the absorption oil over time.

### Process for organic material oil extraction

The present invention also relates to a process for extracting oil from oil-containing organic material by means of solvent, and the process is comprising the steps of:
i) Extracting oil-containing organic material with solvent and obtaining a miscella stream, a stream of solvent-wet residual solids, and a first effluent gas stream;
ii) Recovering solvent from the solvent-wet residual solids stream from step i) and obtaining a second recovered solvent stream, a desolventized residual solids stream and a second effluent gas stream;
iii) Separating the miscella stream from step i) into a first recovered solvent stream, extracted oil and a third effluent gas stream;
iv) Recovering solvent from an effluent gas stream comprising the first effluent gas stream from step i), the second effluent gas stream from step ii), the third effluent gas stream from step iii), from any leak of air through joints or flanges, or a combination of two or more thereof, wherein the solvent recovering step is comprising the method for recovering solvent from an effluent gas according to the present invention, and obtaining a third recovered solvent steam and an exit gas; and
v) Reuse of a recovered solvent stream comprising the first recovered solvent stream from step i), the second recovered solvent stream from step ii) and/or the third recovered solvent stream from step iv) for extraction of oil from oil-containing organic material.

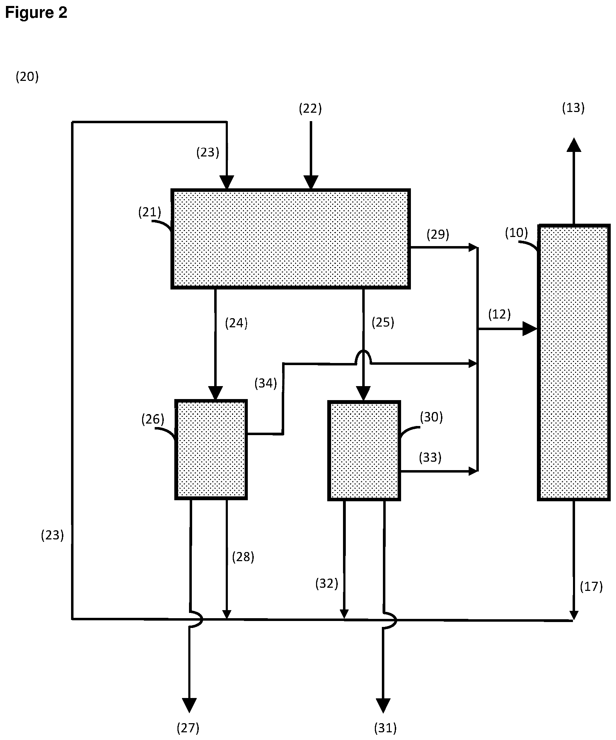

The process for solvent-extracting oil from organic material is performed in a solvent extraction system (20) (see figure 2), comprising an extractor unit (21), a solvent recovery unit (26), a desolventizing unit (30) and a solvent absorption system (10).

### Step i) - Extracting oil-containing organic material with solvent

Step i) of the process is performed in the extractor unit (21). The extractor unit (21) may have any suitable type of extractor design such as, but not limited to, an immersion extractor or a percolation extractor. Typically, the extractor unit (21) is operated such that a stream of solvent (23) and a stream of oil-containing organic material (22) is introduced into the extractor unit (21) and flowing in counter-current directions through the extractor unit.

The oil-containing organic material (22) may be derived from any type of organic material. "Organic material" refers to any carbon-based compounds, derived from living organisms as well as their lab-synthesized versions. Oil-containing organic material be originating from plants, animals and micro-organisms. Oil-containing plant material may be oil-bearing seeds or fruits such as, but not limited to, soybeans, rapeseeds, sunflower seeds, peanuts, cottonseeds, palm kernels, palm fruits, coconuts, com germs and combinations thereof. Preferably, the oil-containing organic material (22) is an oil-containing plant material. More preferably, the oil-containing organic material (22) is derived from seeds selected from the group consisting of soybeans, rapeseeds, sunflower seeds, and any combination of two or more thereof.

The oil-containing organic material (22) may be organic-material from which oil was already partially removed by means of mechanical processing. The oil-containing organic material (22) may have been treated prior to step i) in order to facilitate oil release during the solvent extraction process. Examples of such treatment are, but are not limited to cleaning, dehulling, drying, heating, cooking, cracking, flaking, expelling, extruding and the like.

The oil-containing organic material (22) may be extracted in step i) of the process with any suitable type of solvents (23), such as, but not limited to hexane, acetone, toluene, petroleum ether, diethyl ether, ethanol, n-heptane, isopropanol, acetone, chloroform, methanol, and 1-butanol, terpenes, or any combination of two or more thereof. Oil- extraction from oil-containing organic material is commonly performed using commercial-grade solvents. Preferably, the solvent present in the effluent gas (12) is comprising hexane. The solvent is including hexane, cyclohexane, heptane, iso-heptane, cyclopentane, corresponding isomers and mixtures of two or more thereof. The term "hexane" is encompassing commercial hexane having boiling point in the temperature range of 65-69°C. Most commercial hexane available contains approximately 65% of n-hexane, with the remaining 35% of the composition being cyclopentane- and hexane-isomers.

During the extraction process, the concentration of extracted oil in the solvent is increasing. The extraction process results in a miscella stream (24), and a solvent-wet residual solids stream (25), i.e. a stream of residual solids containing solvent. The miscella stream (24) leaving the solvent extractor contains about 70-80 wt.% solvent on total weight of miscella. Furthermore, the extraction process is resulting in a first effluent gas stream (29) that is loaded with solvent. This effluent gas stream (29) can be brought into the solvent absorption system (10).

### Step ii) - Recovering solvent from the solvent-wet residual solids stream from step i)

In step ii) of the process according to the invention, solvent is recovered from the solvent-wet residual solids stream (25) in the desolventizing unit (30). The temperature of the stream may be increased to a temperature above the boiling point of the solvent, causing residual solvent to vaporize. Temperature of the stream may be increased by any means of direct or indirect heating, such as for example by means of steam injection into desolventizing unit (30). The desolventizing unit (30) may be configured as a conventional desolventizer, using direct and/or indirect steam, a flash desolventizer, a fluid bed desolventizer, or a vacuum desolventizing/stripping unit.

The solvent recovery in step ii) of the process according to the invention results in a de-solventized residual solids stream (31). The de-solventized residual solids stream (31) that is obtained in step ii) of the process according to the invention has a solvent content of less than 2 wt.%, mess than 1 wt.% or even less than 0.5 wt.% of solvent on total weight of the de-solventized residual solids stream. Furthermore, the solvent recovery in step ii) of the process results in a second effluent gas stream (33). This effluent gas stream (33) can be brought into the solvent absorption system (10).

### Step iii) - Separating the miscella stream from step i)

In step iii) of the process according to the invention, solvent is recovered from the miscella stream (24) in the solvent recovery unit (26). The solvent recovery unit (26) may be implemented using one or more distillation columns, stripping columns, and/or evaporator units.

The solvent recovery unit (26) may be effective to remove the solvent from the extracted oil in the miscella stream (24). The extracted oil stream (27) that is obtained in step iii) of the process according to the invention has a solvent content of less than 2 wt.%, less than 1 wt.% or even less than 0.5 wt.% of solvent on total weight of the extracted oil stream. Next to the extracted oil stream (27), a solvent-water vapor is obtained in step iii) that is further condensed. A first recovered solvent stream (28) is obtained and a remaining non-condensable effluent gas (34).

Non-condensable effluent gas is a third effluent gas steam (34) that may be further treated in step iv) for removing the remaining solvent.

### Step iv) - Recovering solvent from an effluent gas stream

In step iv) of the process according to the invention, solvent is recovered from effluent gas streams. The solvent-rich effluent gas streams comprise a first effluent gas stream (29) obtained in step i) of the process, a second effluent gas stream (33) obtained in step ii) of the process, a third effluent gas stream (34) obtained in step iii) of the process, or a combination of 2 or more thereof. Preferably, the solvent-rich effluent gas streams comprise a first effluent gas stream (29) obtained in step i) of the process, a second effluent gas stream (33) obtained in step ii) of the process and a third effluent gas stream (34) obtained in step iii) of the process. The solvent recovering step is comprising the method for recovering solvent from an effluent gas according to the present invention. Typically, the solvent recovering step is further comprising a step of condensing in a condenser the effluent gas prior to the method for recovering solvent from the effluent gas. The use of the condenser allows to remove condensable gases and/or liquids from the effluent gas stream. As a result, the effluent gas being processed by the method of the present invention may be a cooled, non-condensable effluent gas.

The solvent recovery in step iv) of the process according to the invention results an exit gas (13) that may be discharged into the atmosphere. The solvent content in the exit gas is less than 0.8 wt%, less than 0.5 wt%, or even less than 0.2 wt% on total weight of the exit gas.

### Step v) - Reuse of a recovered solvent stream

In step v) of the process according to the invention, a recovered solvent stream is reused for extraction of oil from oil-containing organic material (22). The recovered solvent stream (23) is comprising the first recovered solvent stream (28) from step iii), second recovered solvent stream (32) from step ii) and/or a third recovered solvent stream (17) from step iv). Preferably, the recovered solvent stream (23) is comprising the first recovered solvent stream (28) from step iii), second recovered solvent stream (32) from step ii) and a third recovered solvent stream (17) from step iv). The recovered solvent stream (23) may be recycled within any oil extraction process. Typically, water that may be present in the recovered solvent stream is removed prior to the recycling of the solvent. Solvent-water separation may occur by means of any suitable process such as, for example in a decanting tank wherein the solvent that is immiscible with water is separated based on their difference in gravity. Preferably, recovered solvent stream (23) is recycled within the extraction process and is provided again as the solvent (23) in step a) of the method.

Th extraction process according to the present invention is highly efficient in terms of solvent recovery and reuse. Additionally, by using the method for solvent recovery from effluent gasses according to the present invention, and thus by making use of MCT oil instead of mineral oil as absorber oil, the extraction process according to the invention does not result in a contamination of the extracted oil with MOH.

Alternative processes exist wherein extracted liquid oils are used as absorber oil. However, such processes are less efficient since the liquid oil cannot be recycled as frequent as the MCT oil due to their high instability in terms of oxidation and polymerization. Existing processes are even not recycling the extracted liquid oil that is serving as absorbent oil. As a result, such processes are not flexible and do not allow easy switching of seed oil type. Additionally, it requires an increased distillation capacity to in order to completely remove the solvent from the absorber oil before it is added back to the rest of the extracted liquid oil.

### Use of MCT oil as absorber oil

Finally, the present invention also relates the use of MCT oil as absorber oil for recovering solvent from an effluent gas of a solvent extraction system for vegetable oil extraction.

It relates to the use of MCT oil as absorber oil for recovering solvent from an effluent gas, wherein the solvent is comprising hexane.

It further relates to the use wherein the effluent gas is from a solvent extraction system wherein oil is extracted from oil-containing organic material.

### EXAMPLE

### Test set-up

Crude sunflower oil was extracted from sunflower seeds at crushing facility in France.

Prior to oil extraction the seeds were cleaned, dried and conditioned.

Oil extraction was subsequently performed by a combination of mechanical pressing of the seeds into sunflower oil and partially de-oiled sunflower cake, followed by extraction of the remaining oil from the cake by means of solvent.

Solvent extraction of the sunflower cake was performed in equipment that is commonly known, comprising an extractor unit (21), a desolventising unit (30), a solvent recovery unit (26), a solvent absorption system (10) for recovering solvent from the effluent streams and a solvent storage unit.

*Step* i): In the extractor unit (21), the partially de-oiled sunflower cake (22) was extracted with hexane. A mixture of hexane/sunflower oil (miscella stream (24)) was obtained and a stream of hexane-wet sunflower meal (25). The effluent gasses from the solvent extraction unit containing hexane were captured (29).

*Step* ii): In the desolventizing unit (30), the hexane was evaporated from the hexane-wet meal (25) that was obtained from step i). A desolventized sunflower meal (31) is obtained and a mixture of hexane and water vapor (32). The effluent gasses from the desolventizing unit containing hexane were captured (33).

Step iii): In the solvent recovery unit (26), the miscella stream (24) is separated into a stream of extracted sunflower oil (27) and a recovered hexane vapor stream by means of distillation. The recovered hexane vapor stream is condensed and a water-hexane stream, i.e. the first recovered solvent stream (28), and an non-condensable effluent gas stream (34) is obtained.

Step iv): Solvent was recovered from the effluent gas stream from step i) (29), from step ii) (33), and from step (iii) (34) in a solvent absorption system (10).
Step b): For solvent recovery, the effluent gas streams were brought into contact with an absorber oil in an absorption column (11) at a temperature of about 25 to 30°C.
In a comparative example (example not according to the invention), the absorber oil is a mineral oil (Parafluid PL501B from PARAFLUID GmbH).
In the example according to the invention, the absorber oil is MCT oil (RADIAMULS MCT 2107K from Oleon, which is a mixture of triglycerides with mainly C8 and C10 fatty acids).
As a result, an exit gas (13) was obtained and a solvent-rich absorber oil (15) (i.e. a solvent-rich mineral oil in case of the comparative example and a solvent-rich MCT oil in case of the example according to the invention).
Step c): The solvent absorbed by the absorber oil was removed from the solvent-rich absorber oil in a stripping column (16) at a temperature of the absorber oil in a range of from 90 to 130°C, from 100 to 125°C, or from 110 to 120°C. Steam was used as stripping agent (18). A recovered hexane stream (17) was obtained and a solvent-lean absorber oil (14) (i.e. a solvent-lean mineral oil in case of the comparative example and a solvent-lean MCT oil in case of the example according to the invention).
Step d): the solvent-lean absorber oil (14) was reused in step a) over a period of 1.5 months.

Step v): The hexane that was recovered from step iv) was reused over a period of 1.5 months in step i) for the extraction of oil from partially de-oiled sunflower cake (22).

### Analysis of MOSH and MOAH in the sunflower oil

Method DIN EN 16995:2017 (as part of CEN/TC275/WG 13) is the method that was used to measure the content of MOSH. The "content of MOSH" is defined as the total amount of saturated hydrocarbons (MOSH) with a carbon chain length in a range of C10 to C50.

### Results

Performance of MCT as absorber oil in the example according to the invention was evaluated and compared to mineral oil in the comparative example.

| | Comparative example | Example according to the invention |
|---|---|---|
| Amount of hexane absorbed in absorber oil after step b) | 2.31% | 2.35% |
| Amount of hexane in exit gas after step b) | 1.7% LEL* | 1.7% LEL* |
| Amount of hexane retained in the absorber oil after step c) | 0.22% | 0.20% |

| | | |
|---|---|---|
| * LEL: "Lower Explosive Limit" is defined as the lowest concentration (by percentage) of a gas or vapor in air that is capable of producing a flash of fire in presence of an ignition source (arc, flame, heat, etc.). | | |

In terms of processability, MCT oil showed similar process performance as mineral oil. Compared to mineral oil, MCT oil resulted in:
- similar efficiency of hexane recovery,
- no indication of fouling of absorption column (step b)) or stripping column (step c)),
- no indication of polymerization,
- similar consumption of absorption oil over time,
- similar consumption of hexane over time,
- similar discoloration of the absorption oil over time.

The solvent extraction process wherein MCT oil was used as absorber oil (example according to the invention) resulted in a lower MOSH content of the obtained solvent extracted sunflower oil.

| | | Comparative example | Example according to the invention |
|---|---|---|---|
| Solvent extracted sunflower oil: | MOSH | 22.4 ppm | 4.3 ppm |

## Claims

1. Method for recovering solvent from an effluent gas, and the method is comprising the steps of:
a) providing an effluent gas from a solvent extraction system wherein oil is extracted from oil-containing organic material;
b) absorbing solvent from the effluent gas using a medium-chain triglyceride (MCT) oil to absorb the solvent;
c) stripping solvent from the MCT oil from step b); and
d) reuse of the recovered MCT oil from step c) for absorbing solvent, and
wherein the MCT oil is a composition comprising triglycerides, diglycerides, monoglycerides and/or free fatty acid having a carbon chain length in a range of C6 to C12 and the fatty acid moiety from C6 to C12 of the MCT oil has a combined content in an amount of more than 70% on total weight of the fatty acid moiety.

2. The method according to claim 1, wherein the reuse of step d) is a recycle into step b).

3. The method according to claim 1 or claim 2, wherein the solvent extraction system is comprising an extractor unit and the effluent gas in step a) is provided from the extractor unit.

4. The method according to any one of the preceding claims, wherein the solvent extraction system is comprising a desolventiser unit and the effluent gas in step a) is provided from the desolventizing unit.

5. The method according to any one of the preceding claims, wherein the effluent gas in step a) has a solvent concentration in a range of from 50 to 70% by weight.

6. The method according to claim 3, wherein the MCT oil has a combined content of fatty acid moiety having a chain length of C8 and C10 in a range of more than 92 wt%.

7. The method according to any one of the preceding claims, wherein the MCT oil has a content of free fatty acids of less than 1%.

8. The method according to any one of the preceding claims, wherein the MCT oil is provided to step b) at a temperature in a range of from 15 to 35°C.

9. The method according to any one of the preceding claims, wherein the effluent gas is provided to step a) at a temperature of from 15 to 35°C.

10. The method according to any one of the preceding claims, wherein the absorption occurs by counter-currently contacting the effluent gas and the MCT oil.

11. Process for extracting oil from oil-containing organic material by means of solvent, and the process is comprising the steps of:
i) Extracting oil-containing organic material with solvent and obtaining a miscella stream, a stream of solvent-wet residual solids, and a first effluent gas stream;
ii) Recovering solvent from the solvent-wet residual solids stream from step i) and obtaining a second recovered solvent stream, a desolventized residual solids stream and a second effluent gas stream;
iii) Separating the miscella stream from step i) into a first recovered solvent stream, extracted oil and a third effluent gas stream;
iv) Recovering solvent from an effluent gas stream comprising the first effluent gas stream from step i), the second effluent gas stream from step ii), the third effluent gas stream from step iii), or a combination of two or more thereof, wherein the solvent recovering step iv) is comprising the method according to any one of claims 1 to 10, and obtaining a third recovered solvent steam and an exit gas; and
v) Reuse of a recovered solvent stream comprising the first recovered solvent stream from step i), the second recovered solvent stream from step ii) and/or the third recovered solvent stream from step iv) for extraction of oil from oil-containing organic material.

12. The method according to claim 11, wherein the reuse of step v) is a recycle into step i).

13. The method according to any one of claim 1 to 10 and the process according to claim 11 or claim 12, wherein solvent is hexane.

14. The use of MCT oil as absorber oil for recovering solvent from an effluent gas, wherein the solvent is comprising hexane, and wherein the MCT oil is a composition comprising triglycerides, diglycerides, monoglycerides and/or free fatty acid having a carbon chain length in a range of C6 to C12 and the fatty acid moiety from C6 to C12 of the MCT oil has a combined content in an amount of more than 70% on total weight of the fatty acid moiety.

15. The use according to claim 14 wherein the effluent gas is from a solvent extraction system wherein oil is extracted from oil-containing organic material.

## Patentansprüche

1. Verfahren zum Rückgewinnen von Lösungsmittel aus einem ausströmenden Gas, und das Verfahren umfassend die Schritte:
a) Bereitstellen eines ausströmenden Gases aus einem Lösungsmittelextraktionssystem, wobei Öl aus ölhaltigem organischem Material extrahiert wird;
b) Absorbieren von Lösungsmittel aus dem ausströmenden Gas unter Verwendung eines mittelkettigen Triglyceridöls (MCT-Öls), um das Lösungsmittel zu absorbieren;
c) Strippen von Lösungsmittel aus dem MCT-Öl aus Schritt b); und
d) Wiederverwendung des rückgewonnenen MCT-Öls aus Schritt c) zum Absorbieren von Lösungsmittel, und
wobei das MCT-Öl eine Zusammensetzung ist, umfassend Triglyceride, Diglyceride, Monoglyceride und/oder freie Fettsäure, die eine Kohlenstoffkettenlänge in einem Bereich von C6 bis C12 aufweisen, und der Fettsäurerest von C6 bis C12 des MCT-Öls einen kombinierten Gehalt in einer Menge von mehr als 70 % des Gesamtgewichts des Fettsäurerests aufweist.

2. Verfahren nach Anspruch 1, wobei die Wiederverwendung in Schritt d) eine Rückführung zu Schritt b) ist.

3. Verfahren nach Anspruch 1 oder 2, wobei das Lösungsmittelextraktionssystem eine Extraktoreinheit umfasst und das ausströmende Gas in Schritt a) aus der Extraktoreinheit bereitgestellt wird.

4. Verfahren nach einem der vorstehenden Ansprüche, wobei das Lösungsmittelextraktionssystem eine Lösungsmittelentfernereinheit umfasst und das ausströmende Gas in Schritt a) aus der Lösungsmittelentfernereinheit bereitgestellt wird.

5. Verfahren nach einem der vorstehenden Ansprüche, wobei das ausströmende Gas in Schritt a) eine Lösungsmittelkonzentration in einem Bereich von 50 bis 70 Gew.-% aufweist.

6. Verfahren nach Anspruch 3, wobei das MCT-Öl einen kombinierten Gehalt an Fettsäurerest, der eine Kettenlänge von C8 und C10 aufweist, in einem Bereich von mehr als 92 Gew.-% aufweist.

7. Verfahren nach einem der vorstehenden Ansprüche, wobei das MCT-Öl einen Gehalt an freien Fettsäuren von weniger als 1 % aufweist.

8. Verfahren nach einem der vorstehenden Ansprüche, wobei das MCT-Öl bei einer Temperatur in einem Bereich von 15 bis 35 °C an Schritt b) bereitgestellt wird.

9. Verfahren nach einem der vorstehenden Ansprüche, wobei das ausströmende Gas bei einer Temperatur von 15 bis 35 °C an Schritt a) bereitgestellt wird.

10. Verfahren nach einem der vorstehenden Ansprüche, wobei die Absorption durch ein Gegenstromkontaktieren des ausströmenden Gases und des MCT-Öls erfolgt.

11. Prozess zum Extrahieren von Öl aus ölhaltigem organischem Material mittels Lösungsmittel, und der Prozess umfassend die Schritte:
i) Extrahieren von ölhaltigem organischem Material mit Lösungsmittel und Erhalten eines Miscellastroms, eines Stroms von lösungsmittelfeuchten residualen Feststoffen und eines ersten Stroms von ausströmendem Gas;
ii) Rückgewinnen von Lösungsmittel aus dem Strom von lösungsmittelfeuchten residualen Feststoffen aus Schritt i) und Erhalten eines zweiten Stroms von rückgewonnenem Lösungsmittel, eines Stroms von lösungsmittelentfernten residualen Feststoffen und eines zweiten Stroms von ausströmendem Gas;
iii) Trennen des Miscellastroms aus Schritt i) in einen ersten Strom von rückgewonnenem Lösungsmittel, extrahiertes Öl und einen dritten Strom von ausströmendem Gas;
iv) Rückgewinnen von Lösungsmittel aus einem Strom von ausströmendem Gas, umfassend den ersten Strom von ausströmendem Gas aus Schritt i), den zweiten Strom von ausströmendem Gas aus Schritt ii), den dritten Strom von ausströmendem Gas aus Schritt iii) oder eine Kombination von zwei oder mehr davon, wobei der Lösungsmittelrückgewinnungsschritt iv) das Verfahren nach einem der Ansprüche 1 bis 10 umfasst, und Erhalten eines dritten Stroms von rückgewonnenem Lösungsmittel und eines Austrittsgases; und
v) Wiederverwendung eines Stroms von rückgewonnenem Lösungsmittel, umfassend den ersten Strom von rückgewonnenem Lösungsmittel aus Schritt i), den zweiten Strom von rückgewonnenem Lösungsmittel aus Schritt ii) und/oder den dritten Strom von rückgewonnenem Lösungsmittel aus Schritt iv), für die Extraktion von Öl aus ölhaltigem organischem Material.

12. Verfahren nach Anspruch 11, wobei die Wiederverwendung in Schritt v) eine Rückführung zu Schritt i) ist.

13. Verfahren nach einem der Ansprüche 1 bis 10 und der Prozess nach Anspruch 11 oder 12, wobei das Lösungsmittel Hexan ist.

14. Verwendung von MCT-Öl als Absorbieröl zum Rückgewinnen von Lösungsmittel aus einem ausströmenden Gas, wobei das Lösungsmittel Hexan umfasst und wobei das MCT-Öl eine Zusammensetzung ist, umfassend Triglyceride, Diglyceride, Monoglyceride und/oder freie Fettsäure, die eine Kohlenstoffkettenlänge in einem Bereich von C6 bis C12 aufweisen, und der Fettsäurerest von C6 bis C12 des MCT-Öls einen kombinierten Gehalt in einer Menge von mehr als 70 % des Gesamtgewichts des Fettsäurerests aufweist.

15. Verwendung nach Anspruch 14, wobei das ausströmende Gas aus einem Lösungsmittelextraktionssystem stammt, wobei Öl aus ölhaltigem organischem Material extrahiert wird.

## Revendications

1. Procédé de récupération de solvant à partir d'un gaz effluent, et le procédé comprend les étapes consistant à :
a) fournir un gaz effluent à partir d'un système d'extraction par solvant dans lequel l'huile est extraite de matière organique contenant de l'huile ;
b) absorber le solvant du gaz effluent à l'aide d'une huile de triglycérides à chaîne moyenne (TCM) pour absorber le solvant ;
c) effectuer un strippage du solvant de l'huile de TCM de l'étape b) ; et
d) réutiliser l'huile de TCM récupérée à l'étape c) pour absorber du solvant, et
dans lequel l'huile de TCM est une composition comprenant des triglycérides, des diglycérides, des monoglycérides et/ou un acide gras libre ayant une longueur de chaîne carbonée comprise dans une plage de C6 à C12 et la partie acide gras allant de C6 à C12 de l'huile de TCM a une teneur combinée en une quantité supérieure à 70 % du poids total de la partie acide gras.

2. Procédé selon la revendication 1, dans lequel la réutilisation de l'étape d) est un recyclage vers l'étape b).

3. Procédé selon la revendication 1 ou la revendication 2, dans lequel le système d'extraction par solvant comprend une unité d'extraction et le gaz effluent de l'étape a) est fourni à partir de l'unité d'extraction.

4. Procédé selon l'une quelconque des revendications précédentes, dans lequel le système d'extraction par solvant comprend une unité de désolvantation et le gaz effluent de l'étape a) est fourni à partir de l'unité de désolvantation.

5. Procédé selon l'une quelconque des revendications précédentes, dans lequel le gaz effluent de l'étape a) a une concentration en solvant dans une plage allant de 50 à 70 % en poids.

6. Procédé selon la revendication 3, dans lequel l'huile de TCM a une teneur combinée en partie acide gras ayant une longueur de chaîne de C8 et C10 comprise dans une plage supérieure à 92 % en poids.

7. Procédé selon l'une quelconque des revendications précédentes, dans lequel l'huile de TCM a une teneur en acides gras libres inférieure à 1 %.

8. Procédé selon l'une quelconque des revendications précédentes, dans lequel l'huile de TCM est fournie à l'étape b) à une température comprise entre 15 et 35 °C.

9. Procédé selon l'une quelconque des revendications précédentes, dans lequel le gaz effluent est fourni à l'étape a) à une température comprise entre 15 et 35 °C.

10. Procédé selon l'une quelconque des revendications précédentes, dans lequel l'absorption se produit par mise en contact à contre-courant du gaz effluent et de l'huile de TCM.

11. Processus d'extraction d'huile à partir de matière organique contenant de l'huile au moyen d'un solvant, et le processus comprend les étapes consistant à :
i) extraire de la matières organique contenant de l'huile avec un solvant et obtenir un flux de miscella, un flux de solides résiduels imprégnés de solvant, et un premier flux de gaz effluent ;
ii) récupérer le solvant à partir du flux de solides résiduels imprégnés de solvant de l'étape i) et obtenir un deuxième flux de solvant récupéré, un flux de solides résiduels désolvantés et un deuxième flux de gaz effluent ;
iii) séparer le flux de miscella de l'étape i) en un premier flux de solvant récupéré, de l'huile extraite et un troisième flux de gaz effluent ;
iv) récupérer le solvant à partir d'un flux de gaz effluent comprenant le premier flux de gaz effluent de l'étape i), le deuxième flux de gaz effluent de l'étape ii), le troisième flux de gaz effluent de l'étape iii), ou une combinaison de deux ou plus de ceux-ci, dans lequel l'étape iv) de récupération de solvant comprend le procédé selon l'une quelconque des revendications 1 à 10, et obtenir un troisième flux de solvant récupéré et un gaz de sortie ; et
v) réutiliser un flux de solvant récupéré comprenant le premier flux de solvant récupéré de l'étape i), le deuxième flux de solvant récupéré de l'étape ii) et/ou le troisième flux de solvant récupéré de l'étape iv) pour l'extraction d'huile à partir de matière organique contenant de l'huile.

12. Procédé selon la revendication 11, dans lequel la réutilisation de l'étape v) est un recyclage vers l'étape i).

13. Procédé selon l'une quelconque des revendications 1 à 10 et processus selon la revendication 11 ou la revendication 12, dans lequel le solvant est l'hexane.

14. Utilisation d'huile de TCM comme huile absorbante pour récupérer un solvant à partir d'un gaz effluent, dans laquelle le solvant comprend de l'hexane, et dans laquelle l'huile de TCM est une composition comprenant des triglycérides, des diglycérides, des monoglycérides et/ou un acide gras libre ayant une longueur de chaîne carbonée dans une plage de C6 à C12 et la partie acide gras allant de C6 à C12 de l'huile de TCM a une teneur combinée en une quantité supérieure à 70 % du poids total de la partie acide gras.

15. Utilisation selon la revendication 14, dans laquelle le gaz effluent provient d'un système d'extraction par solvant dans lequel l'huile est extraite de matière organique contenant de l'huile.
